# EUROPÄISCHE PATENTSCHRIFT

(11) **EP 2 780 804 B1**
(45) Veröffentlichungstag und Bekanntmachung des Hinweises auf die Patenterteilung: **16.06.2021**
(21) Anmeldenummer: 12791698.9
(22) Anmeldetag: 13.11.2012
(51) Int. Cl.: G06F 9/50, G06F 9/48, G06Q 20/34

(54) **VERFAHREN ZUR STEUERUNG DER PROGRAMMAUSFÜHRUNG**
METHOD FOR CONTROLLING PROGRAM EXECUTION
PROCÉDÉ DESTINÉ À COMMANDER L'EXÉCUTION D'UN PROGRAMME

(30) Priorität: 15.11.2011 DE 102011118563
(43) Veröffentlichungstag der Anmeldung: 24.09.2014
(73) Patentinhaber: Giesecke+Devrient Mobile Security GmbH, 81677 München (DE)
(72) Erfinder: KRAMPOSTHUBER, Georg, 80639 München (DE); MATHÉ, Werner, 82216 Maisach (DE)
(86) Internationale Anmeldenummer: PCT/EP2012/004711
(87) Internationale Veröffentlichungsnummer: WO 2013/072038

(56) Entgegenhaltungen:
- US-A1- 2002 069 402
- DAMIEN DEVILLE ET AL: "Trusted Collaborative Real Time Scheduling in a Smart Card Exokernel", INSTITUT NATIONAL DE RECHERCHE EN INFORMATIQUE ET EN AUTOMATIQUE. RAPPORTS DE RECHERCHE, INSTITUT NATIONAL DE RECHERCHE EN INFORMATIQUE ET EN AUTOMATIQUE (INRIA), FR, Nr. 5161, 1. April 2004 (2004-04-01), Seiten 1-15, XP002454533, ISSN: 0249-6399

## Beschreibung

Die Erfindung betrifft das technische Gebiet des Steuerns der Programmausführung in einem ressourcenbeschränkten System und insbesondere die auch als *Scheduling* bekannte Zuteilung von Programmausführungsressourcen an auszuführende Threads. Die Erfindung eignet sich zur Verwendung bei ressourcenbeschränkten Systemen wie z.B. eingebetteten Systemen (*Embedded Systems*) und tragbaren Datenträgern. Ein tragbarer Datenträger im Sinne des vorliegenden Dokuments kann insbesondere eine Chipkarte (*Smart Card*) in unterschiedlichen Bauformen oder ein Chipmodul (*Token*) sein.

Tragbare Datenträger werden mit immer mehr Speicherplatz und immer größerer Rechenleistung hergestellt. Bei modernen tragbaren Datenträgern erreicht die Leistungsfähigkeit der Hardware einen Bereich, der die Verwendung von multitasking- und/oder multithreadingfähigen Betriebssystemen gestattet. Ein Beispiel für ein multithreadingfähiges Betriebssystem stellt eine Virtuelle Java Maschine dar.

Trotz aller hardwaretechnischen Fortschritte weisen tragbare Datenträger jedoch nach wie vor erheblich geringere Programmausführungsressourcen auf als andere Computer, auf denen typischerweise multitasking- und/oder multithreadingfähige Betriebssysteme ausgeführt werden. Eine besonders ressourcenschonende Betriebsweise ist daher wünschenswert.

Ein multithreadingfähiges ressourcenbeschränkten System hat einen Prozessor, ein multithreadingfähiges Betriebssystem und ein oder mehrere auf dem Prozessor unter Koordinierung des Betriebssystems auszuführende Threads. Der Prozessor kann jeweils nur einen einzigen Thread auf einmal ausführen. Andere auszuführende Threads sind währenddessen nicht in Ausführung auf dem Prozessor.

Jeder auf dem Prozessor auszuführende Thread hat einen von drei möglichen Zuständen, erstens wartend (waiting), zweitens bereit (ready), drittens laufend oder in Ausführung befindlich (running, executing). Im wartenden Zustand (waiting) wartet der Thread auf ein Ereignis, beispielsweise auf externe Daten oder den Ablauf eines Zeitintervalls, und kann nicht zur Ausführung auf dem Prozessor gelangen, bevor das Ereignis eingetreten ist. Im bereiten Zustand (ready) ist der Thread zur Ausführung auf dem Prozessor bereit, wird aber nicht ausgeführt, beispielsweise da gerade ein anderer Thread ausgeführt wird. Im Zustand in Ausführung oder laufend wird der Thread gerade auf dem Prozessor ausgeführt. Die Zuordnung von Prozessorressourcen, insbesondere Prozessor-Rechenzeiten, an die Threads wird als Scheduling bezeichnet.

Ein bekanntes Scheduling-Verfahren ist das Round-Robin-Verfahren, bei dem das Betriebssystem auf dem Prozessor auszuführende, im bereiten Zustand befindliche Threads in eine Warteschlange einreiht und jedem Thread reihum ein begrenztes Zeitintervall an Prozessor-Rechenzeit zuweist. Während des Zeitintervalls ist der jeweilige Thread laufend / in Ausführung. Nach Ablauf der Rechenzeit wird der Thread in den bereiten Zustand versetzt und an das Ende der Warteschlange gestellt. Manche Threads in der Warteschlange können priorisiert sein und dadurch vorgezogen vor anderen Threads in der Warteschlange zur Ausführung gebracht werden.

Ein weiteres Scheduling-Verfahren ist der Programmverzweigungs-Zähler, bei dem Programmverzweigungen innerhalb des auf dem Prozessor laufenden Threads gezählt werden. Hat die Anzahl der gezählten Programmverzweigungen innerhalb des Threads einen Schwellenwert erreicht oder überschritten, wird der Thread in den bereiten Zustand versetzt und ein anderer Thread zur Ausführung auf dem Prozessor gebracht, z.B. ein Thread aus einer Round-Robin Warteschlange.

DE 10 2005 019 260 A1 offenbart ein Verfahren gemäß dem Oberbegriff von Anspruch 1, genauer ein Verfahren zur Steuerung der Programmausführung in einem ressourcenbeschränkten System mit einem Betriebssystem und zumindest einem Thread (Prozess), wobei das Betriebssystem gemäß einem Scheduling-Verfahren jedem auszuführenden Thread/Prozess Programmausführungsressourcen zuteilt. Dabei kann auf Anforderung eines berechtigten Threads/Prozesses das Scheduling-Verfahren geändert werden, insbesondere ein dabei verwendeter Scheduler deaktiviert werden. Insbesondere in dem Fall, dass nur ein einziger Thread/Prozess zur Ausführung ansteht, ist dieses Verfahren vorteilhaft und bietet innerhalb des Systems die Möglichkeit, die vorhandenen Ressourcen effizient zu verteilen, z.B. dem ohnehin einzigen Thread/Prozess zuzuweisen.

Ressourcenbeschränkte Systeme, insbesondere solche in Gestalt von Datenträgern, z.B. Smart Cards, haben in der Regel ein oder mehrere Schnittstellen, wahlweise kontaktlos oder kontaktbehaftet, zur kontaktlosen oder kontaktbehafteten Kommunikation mit externen, außerhalb des Systems angeordneten Einrichtungen wie z.B. Computern, über Lesegeräte der Einrichtungen, z.B. kontaktlose bzw. kontaktbehaftete Chipkartenleser. Über die Schnittstellen kann das System Daten, insbesondere Kommandos, mit den externen Einrichtungen austauschen.

WO 2008/001189 A1 offenbart Verfahren zur Übertragung von Daten zwischen einem tragbaren Datenträger in Form eines Tokens, auf dem mehrere Applikationen lauffähig (ausführbar) sind, und einer externen Einrichtung (device). Ein Thread Controller des Tokens überträgt reihum für jede Applikation Daten an die externe Einrichtung. Jeder Applikation wird dabei eine unterschiedliche Anzahl von Datentransfers zugewiesen, die der Priorität der jeweiligen Applikation entspricht. Hierdurch werden an die externe Einrichtung, abhängig von der internen Steuerung innerhalb des Tokens, unterschiedliche Daten ausgegeben.

Damien Deville et al: "Trusted Collaborative Real Time Scheduling in a Smart Card Exokernel",INSTITUT NATIONAL DE RECHERCHE EN INFORMATIQUE ET EN AUTOMATIQUE (INRIA), FR, Nr. 5161, 1. April 2004 (2004-04-01), Seiten 1-15, XP002454533,ISSN: 0249-6399 offenbart einen Überblick über Scheduling-Verfahren für Chipkarten unter Echtzeitbedingungen.

In Situationen, bei denen ein ressourcenbeschränktes System über eine seiner externen Schnittstellen Daten von einer externen Einrichtung entgegennimmt, kann gefordert sein, dass das System in Reaktion auf die Daten Reaktionsdaten ausgibt und dabei durch die externe Einrichtung vorbestimmte externe Zeitvorgaben einhält. Die externen Zeitvorgaben können im Interessenskonflikt mit einem durch das Betriebssystem vorgegebenen internen Scheduling-Verfahren für das System stehen.

Beispielsweise wird in Reaktion auf ein an einer Kontaktlosschnittstelle einer Kontaktloschipkarte oder einer Dual-Interface-Chipkarte eingegebenes Kommando innerhalb eines von außen vorbestimmten Zeitintervalls eine Antwort auf das Kommando erwartet. Gemäß einem anderen Beispiel kann es bei der Verarbeitung von Internetprotokollen innerhalb einer Chipkarte oder einem ähnlichen System vorkommen, dass mehrere unter dem Internetprotokoll laufende, auf das System zugreifende Sitzungen gleichzeitig ablaufen, und dass jede Sitzung externe Zeitvorgaben an das System stellt, durch welche ein vorgegebenes Zeitverhalten des Systems gefordert wird.

Wünschenswert wäre eine Lösung für eine Kommunikation eines ressourcenbeschränkten Systems mit einer externen Einrichtung über eine externe Schnittstelle des Systems, beispielsweise gemäß den beiden oben skizzierten Beispielen, bei der Anforderungen der externen Einrichtung an das System auf effiziente Weise berücksichtigt werden können.

Der Erfindung liegt die Aufgabe zu Grunde, ein Verfahren bereitzustellen, das eine effiziente Steuerung der Programmausführung bei einem ressourcenbeschränkten System unter Berücksichtigung der Anforderungen einer externen Einrichtung erlaubt.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist zur Steuerung der Programmausführung in einem ressourcenbeschränkten System eingerichtet. Das ressourcenbeschränkte System hat einen Prozessor, eine multithreadingfähige Virtuelle Maschine, mindestens eine externe Schnittstelle und mindestens einen auf dem Prozessor unter Koordinierung der virtuellen Maschine auszuführenden Thread. Die Virtuelle Maschine teilt gemäß einem Scheduling-Verfahren jedem auszuführenden Thread Programmausführungsressourcen zu. Das Verfahren zeichnet sich dadurch aus, dass
- von mindestens einer außerhalb des Systems angeordneten externen Einrichtung externe Daten an mindestens einer externen Schnittstelle des Systems bereitgestellt werden,
- die externen Daten an der mindestens einen externen Schnittstelle durch das System entgegen genommen werden, und
- das Scheduling-Verfahren durch die Virtuelle Maschine unter Verwendung der externen Daten gesteuert wird,
dadurch gekennzeichnet, dass
die externen Daten in einem an der externen Schnittstelle empfangenen Application Protocol Data Unit, "APDU", Betriebssystem-Kommando, enthalten sind.

Dadurch, dass das System der externen Einrichtung die Möglichkeit bietet, an der externen Schnittstelle externe Daten in das System einzuspeisen, durch die das Scheduling-Verfahren gesteuert wird, kann die externe Einrichtung direkt Einfluss nehmen auf das Scheduling-Verfahren und somit auf die Programmausführung. Die externe Einrichtung kann so ihre Anforderungen an die innerhalb des Systems erfolgende Programmausführung durchsetzen. Andererseits kann das System die Anforderungen der externen Einrichtung direkt von dieser entgegennehmen und ohne großen eigenen Aufwand in das Scheduling-Verfahren einbringen und hierdurch die Programmausführung effizient auf die Anforderungen der externen Einrichtung abstimmen. Daher ist gemäß Anspruch 1 ein Verfahren geschaffen, das eine effiziente Steuerung der Programmausführung bei einem ressourcenbeschränkten System unter Berücksichtigung der Anforderungen einer externen Einrichtung erlaubt.

Wahlweise umfasst das Steuern des Scheduling-Verfahrens durch die Virtuelle Maschine unter Verwendung der externen Daten, dass ein ursprüngliches Scheduling-Verfahren durch die externen Daten überstimmt wird. Das ursprüngliche Scheduling-Verfahren kann z.B. durch einen internen Scheduler (vgl. weiter unten) definiert sein.

Das System kann eine einzige externe Schnittstelle haben, an der eine einzige externe Einrichtung ankoppelbar ist. Das System kann alternativ mehrere Schnittstellen mit je einer externen Einrichtung haben. Alternativ können an der oder jeder Schnittstelle mehrere externe Einrichtungen ankoppelbar sein.

Wahlweise umfasst das Steuern unter Verwendung der externen Daten oder besteht darin, dass bewirkt wird, dass ein vorbestimmter Thread auf dem Prozessor ausgeführt wird.

Dieses Bewirken der Threadausführung kann wahlweise dadurch erfolgen, dass ein zuvor nicht ausgeführter Thread, der z.B. vor Empfang der externen Daten bereit oder wartend ist, zur Ausführung gebracht wird. Alternativ kann das Bewirken der Threadausführung dadurch erfolgen, dass ein gemäß dem Scheduling-Verfahren eigentlich vorgesehener Threadwechsel unterbunden wird und statt des gemäß dem Scheduling-Verfahren vorgesehenen neuen Threads weiterhin der bisher in Ausführung befindliche Thread ausgeführt wird. Hierdurch bietet das erfindungsgemäße Verfahren die Möglichkeit, Threadwechsel nur dann durchzuführen, wenn sie unbedingt erforderlich sind, und bedarfsweise insbesondere zu verhindern.

Wahlweise befindet der vorbestimmte Thread sich vor dem Entgegennehmen der externen Daten in einem wartenden Zustand, in welchem der vorbestimmte Thread auf dem Prozessor nicht ausführbar ist; der vorbestimmte Thread wird oder würde in diesem Fall vorzugsweise weiter durch die entgegengenommenen externen Daten von dem wartenden in einen bereiten Zustand übergeführt, in welchem der vorbestimmte Thread auf dem Prozessor ausführbar ist. Erfindungsgemäß wird der wartende Thread nun weiter direkt zur Ausführung gebracht, also in den ausführenden oder laufenden Zustand versetzt, ohne vorher einem weiteren Scheduling unterworfen zu werden. Beispielsweise wird der wartende Zustand, der herkömmlicherweise durch Entgegennahme der externen Daten erzielt würde, übersprungen, oder die externen Daten bewirken ein sofortiges Weiterwechseln vom wartenden in den ausführenden Zustand.

Wahlweise wird das Scheduling-Verfahren durch einen innerhalb des Systems angeordneten internen Scheduler koordiniert, wobei das Steuern unter Verwendung der externen Daten umfasst oder darin besteht, dass ein anderer Thread auf dem Prozessor ausgeführt wird als gemäß dem internen Scheduler vorgesehen ist.

Die im vorletzten Absatz angeführte Ausführungsform, mit Zustandswechsel vom wartenden in den bereiten Zustand durch externe Daten, kann insbesondere mit einem internen Round-Robin-Scheduler des Systems kombiniert sein. Herkömmlicherweise müsste sich der Thread, nachdem er die externen Daten empfangen hat, und nun bereit zur Ausführung ist, in eine Warteschlange des Round-Robin-Schedulers einreihen. Erfindungsgemäß muss sich der durch den Empfang der externen Daten in den bereiten Zustand übergegangene Thread nicht in die Warteschlange einreihen, sondern wird sofort zur Ausführung dem Prozessor zugeführt. Diese Variante der Erfindung bietet somit die Möglichkeit, Ereignisse wie den Eingang externer Daten in der Programmabarbeitung zu priorisieren. Beispielsweise kann ein APDU-Kommando, das an einer Kontaktlosschnittstelle eingeht, einen Threadwechsel erzwingen. Der erzwungene Threadwechsel hat den zusätzlichen Vorteil, dass der Threadwechsel sofort erfolgt und somit Wartezeiten, die beim Threadwechsel gemäß Vorschriften eines internen oder externen Schedulers auftreten können, vermieden werden.

Wahlweise wird alternativ das Scheduling-Verfahren durch einen außerhalb des Systems, in der externen Einrichtung angeordneten externen Scheduler koordiniert und gesteuert. Bei dieser Alternative hat das System keinen eigenen Scheduler, sondern die Virtuelle Maschine übernimmt direkt die Anweisungen des externen Schedulers.

Wahlweise sind die externen Daten in einem an der externen Schnittstelle empfangenen Betriebssystem-Kommando, insbesondere APDU-Kommando, enthalten. Die virtuelle Maschine extrahiert die Daten aus dem Kommando und koordiniert das Scheduling-Verfahren gemäß den extrahierten Daten.

Wahlweise umfassen die externen Daten zumindest eine Zeitvorgabe, z.B. eine Angabe wie lange die Abarbeitung eines Threads höchstens dauern darf, und/oder innerhalb welches Zeitintervalls durch den Thread eine Ausgabe an der externen Schnittstelle bereitgestellt werden muss.

Wahlweise umfassen die externen Daten zumindest eine Bezeichnung eines vorbestimmten Threads, der auf dem Prozessor zur Ausführung gebracht werden soll. Dies ist insbesondere der Fall, wenn ein anderer Thread als der gerade ausgeführte zur Ausführung gebracht werden soll. Falls der aktuell ausgeführte Thread weiter ausgeführt werden soll, reicht optional auch die Angabe, dass der ausgeführte Thread weiter ausgeführt werden soll, oder dass ein Threadwechsel unterbunden werden soll, ohne konkrete Threadbezeichnung. Alternativ ist im letzten Fall ebenfalls ein Thread bezeichnet.

Wahlweise ist als Scheduling-Verfahren - internes oder externes - zumindest eines der folgenden Verfahren oder eine Kombination mehrerer dieser Verfahren vorgesehen: ein Round-Robin-Verfahren, optional ohne oder mit Priorisierung einzelner Threads, ein Verzweigungszähler-Verfahren.

Wahlweise weist zumindest ein Thread zumindest eine oder mehrere Programmverzweigung auf. Erfindungsgemäß umfasst das Steuern unter Verwendung der externen Daten oder besteht darin, dass nach zumindest manchen der Programmverzweigungen, vorzugsweise nach jeder Programmverzweigung, unter Verwendung der externen Daten bewirkt wird, dass ein vorbestimmter Thread auf dem Prozessor ausgeführt wird. Dabei kann insbesondere nach jeder Programmverzweigung gezielt ein Threadwechsel entweder forciert oder unterbunden werden. Wahlweise kann bei dieser Option auf einen Programmverzweigungszähler verzichtet werden, da ohnehin nach Programmverzweigungen der auszuführende Thread allein auf Grund der externen Daten festgelegt wird. Wahlweise alternativ umfasst das Scheduling zusätzlich ein Verzweigungszähler-Verfahren, bei dem innerhalb jedes Threads eine Anzahl von beim Ausführen des Threads auftretenden Programmverzweigung ermittelt wird und anlässlich eines Erreichens oder Überschreitens eines Schwellenwertes der Anzahl von Programmverzweigungen vorgesehen ist, dass die Ausführung des Threads unterbrochen wird, wobei der Verzweigungszähler durch externe Daten überstimmt werden kann.

Wahlweise umfasst das System mehrere externe Schnittstellen. Wahlweise haben die mehreren externen Schnittstellen unterschiedliche Prioritäten. Wahlweise werden, wenn das Scheduling-Verfahren durch die Virtuelle Maschine unter Verwendung der externen Daten gesteuert wird, die externen Daten der mehreren externen Schnittstellen unter Berücksichtigung der unterschiedlichen Prioritäten der Schnittstellen verwendet, so dass z.B. externe Daten von Schnittstellen mit hoher Priorität früher zur Abarbeitung durch den jeweils zugewiesenen Thread auf dem Prozessor führen als externe Daten von Schnittstellen mit geringer Priorität.

Die Programmausführung unter Koordinierung der Virtuellen Maschine erfolgt beispielsweise dadurch, dass die Virtuelle Maschine in einer Interpreterschleife Programmbefehle abarbeitet, die in einem Programmspeicher in einer Reihenfolge bereitgestellt sind. Die Reihenfolge der Programmbefehle im Programmspeicher ist durch den Scheduler bestimmt worden.

Im Folgenden wird die Erfindung an Hand von Ausführungsbeispielen und unter Bezugnahme auf die Zeichnung näher erläutert, in der zeigen:
- Fig. 1: ein Schaubild zur Veranschaulichung einer Steuerung eines Scheduling-Verfahrens durch externe Daten in der Chipkarte aus Fig. 3, gemäß einer Ausführungsform der Erfindung;
- Fig. 2: ein Schaubild zur Veranschaulichung einer Steuerung eines Scheduling-Verfahrens durch externe Daten, die ein Zeitvorgabe umfassen, in der Chipkarte aus Fig. 3, gemäß einer Ausführungsform der Erfindung;
- Fig. 3: eine Chipkarte als Beispiel für ein ressourcenbeschränktes System.

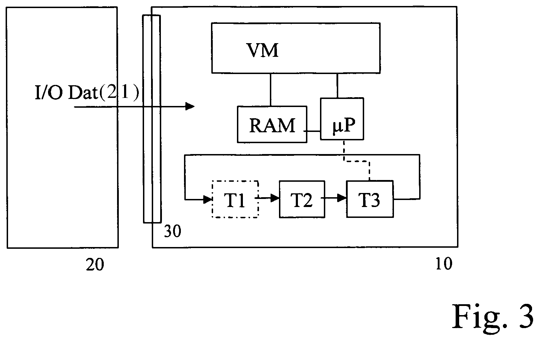

Fig. 3 zeigt in schematischer Darstellung eine Chipkarte 10 als Beispiel für ein ressourcenbeschränktes System 10 gemäß der Erfindung, sowie eine mit der Chipkarte kommunikationsfähige externe Einrichtung 20. Die Chipkarte 10 hat eine externe Schnittstelle 30 zur Kommunikation mit der externen Einrichtung 20. Die Schnittstelle 30 kann kontaktbehaftet oder kontaktlos sein. Die externe Einrichtung kann z.B. ein Computer mit einem kontaktbehafteten oder kontaktlosen Chipkartenleser sein, oder alternativ ein Mobiltelefon mit einem NFC-Kartenleser (NFC = Near Field Communication), oder ein Mobiltelefon mit einem kontaktbehafteten SIM-Kartenleser, wobei die Chipkarte 10 als SIM-Karte gestaltet ist. Die Chipkarte 10 hat weiter eine Virtuelle Maschine VM, die als Betriebssystem die Programmabarbeitung in der Chipkarte 10 steuert. Die Chipkarte 10 hat weiter einen Prozessor µP und ein oder mehrere (nicht sämtliche dargestellte) Speicher wie ROM, Flash, EEPROM, RAM, in denen die Virtuelle Maschine, Programme, Daten abgespeichert sind. Die Verwaltungsinformationen der durch den Prozessor µP abzuarbeitenden Threads sind im flüchtigen Arbeitsspeicher RAM gespeichert. Im Arbeitsspeicher RAM werden unter Koordinierung eines internen Round Robin Schedulers mit Verzweigungszähler der Virtuellen Maschine VM mehrere Threads, hier drei Threads T1, T2, T3, verwaltet. Der dritte Thread T3 wird gerade auf dem Prozessor µP ausgeführt, wie durch die gestrichelte Verbindung angedeutet ist. Der zweite Thread T2 ist im bereiten Zustand, aber in der Warteschlange des internen Round Robin Schedulers hinter dem dritten Thread T3 angeordnet und kann somit gemäß den Regeln des internen Round Robin Schedulers nicht auf dem Prozessor ausgeführt werden, bevor der dritte Thread den Prozessor µP verlässt. Der dritte Thread T3 verlässt gemäß dem internen Scheduler den Prozessor µP, wenn in seinem Programm eine vorbestimmte Anzahl von Programmverzweigungen erreicht wird. Der erste Thread T1 ist im wartenden Zustand, in dem er auf externe Daten I/O Dat von der externen Schnittstelle 30 wartet, und somit nicht zur Ausführung auf dem Prozessor µP bereit, bevor die externen Daten I/O Dat beim ersten Thread T1 eingehen. In der Chipkarte 10 aus Fig. 3 ist die externe Schnittstelle 30 beim internen Scheduler als Instanz höherer Priorität registriert, so dass durch an der Schnittstelle 30 eingehende externe Daten I/O Dat der interne Scheduler im Konfliktfall überstimmt wird.

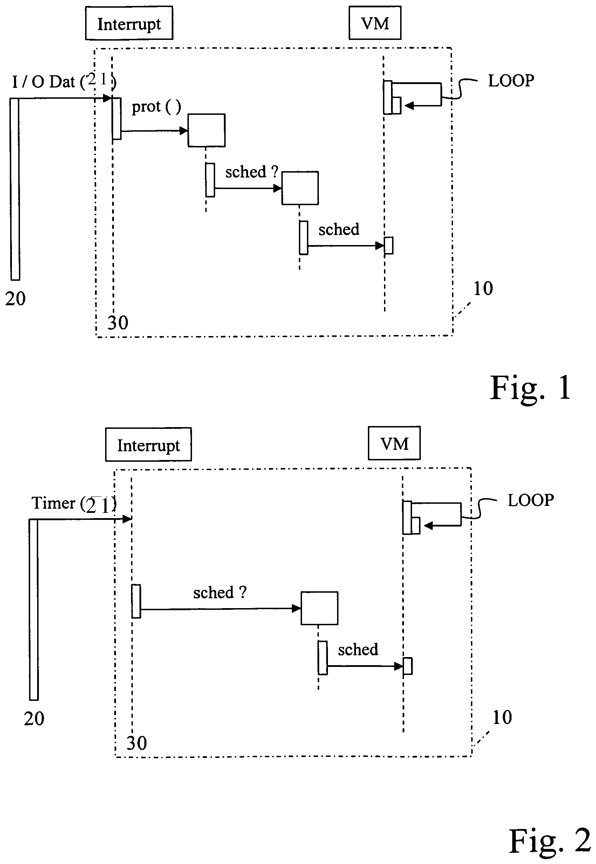

Fig. 1 veranschaulicht eine Steuerung eines durch externe Daten I/O Dat (21) gesteuerten Scheduling-Verfahrens in der in Fig. 3 gezeigten Chipkarte 10, gemäß einer Ausführungsform der Erfindung. Die Virtuelle Maschine VM arbeitet in einer Interpreterschleife LOOP nacheinander alle durch den Prozessor abzuarbeitenden Prozessorbefehle der drei Threads T1, T2, T3 ab, in der Reihenfolge, in der sie auf einem Programmspeicher der Chipkarte bereitgestellt werden. Der interne Scheduler und die externe Schnittstelle 30 steuern dabei gemeinsam die Reihenfolge der Abarbeitung der Prozessorbefehle. Gemäß dem internen Scheduler würden zunächst alle Prozessorbefehle des dritten Threads T3 abgearbeitet bis die zulässige Höchstzahl von Programmverzweigungen erreicht ist, und anschließend mit der Abarbeitung des zweiten Threads T2 begonnen. Die Chipkarte 10 nimmt an der Schnittstelle 30 externe Daten I/O Dat entgegen, die durch die externe Einrichtung 20 bereitgestellt werden, im vorliegenden Beispiel die externen Daten I/O Dat (21), auf die der erste Thread T1 wartet. Durch die externen Daten I/O Dat (21) wird zunächst bewirkt, dass die Abarbeitung der Interpreterschleife LOOP der Virtuellen Maschine unterbrochen wird, hier z.B. mit einem Interrupt. Die externen Daten I/O Dat (21) werden gemäß einem festgelegten internen Protokoll prot () der Chipkarte 10 dem internen Scheduler zugeführt (Pfeil "prot()"). Der Scheduler prüft, ob auf Grund der externen Daten I/O Dat (T1) die Programmabarbeitung geändert werden muss, ob also das Scheduling gegenüber dem intern geplanten Scheduling geändert werden muss (Pfeil "sched?")). Entsprechend der Überprüfung wird das Scheduling festgesetzt, dabei ggf. geändert festgesetzt (Pfeil "sched"). Im Beispiel aus Fig. 1 wird festgestellt, dass die erwarteten externen Daten I/O Dat (21) für den ersten Thread T1 eingetroffen sind, durch welche der erste Thread T1 vom wartenden in den bereiten Zustand übergeführt wird. Die Schnittstelle 30 hat im vorliegenden Beispiel, wie bereits gesagt, eine höhere Priorität als der interne Scheduler. Daher wird auf Grund der entgegen genommenen externen Daten I/O Dat (21) für den ersten Thread T1 der erste Thread T1 direkt zur Ausführung auf dem Prozessor µP gebracht. Die gemäß dem internen Scheduler priorisierten restlichen Befehle des gerade laufenden dritten Threads T3 und der gemäß dem internen Scheduler priorisierte zweite Thread T2 werden nach dem ersten Thread T1 in die Warteschlange des internen Schedulers eingereiht. Die Interpreterschleife LOOP nimmt schließlich die Programmabarbeitung entsprechend dem so festgelegten Scheduling wieder auf.

Fig. 2 zeigt die Steuerung eines Scheduling-Verfahrens durch externe Daten Timer (21), die eine Zeitvorgabe umfassen, in der Chipkarte aus Fig. 3, gemäß einer Ausführungsform der Erfindung. Die externen Daten Timer (21) sind wieder für den ersten Thread T1 bestimmt und enthalten eine Zeitvorgabe, innerhalb welches Zeitintervalls der Thread T1 eine Ausgabe an der externen Schnittstelle 30 bereitstellen muss. Die Zeitvorgabe der externen Daten Timer (21) kann insbesondere zusätzlich zu den anhand von Fig. 1 beschriebenen externen Daten I/O Dat (21) an der Schnittstelle 30 entgegen genommen und in der Chipkarte 10 verarbeitet werden. Durch die externen Zeitvorgabe-Daten Timer (21) wird zunächst bewirkt, dass die Abarbeitung der Interpreterschleife LOOP der Virtuellen Maschine unterbrochen wird, hier z.B. mit einem Interrupt. Anschließend wird, analog wie im Beispiel aus Fig. 1, das interne Scheduling überprüft und ggf. an die Zeitvorgabe in den externen Daten Timer (21) angepasst. Die Interpreterschleife LOOP nimmt schließlich die Programmabarbeitung entsprechend dem so festgelegten Scheduling wieder auf.

## Patentansprüche

1. Verfahren zur Steuerung der Programmausführung in einer Chipkarte (10), wobei die Chipkarte (10) einen Prozessor (µP), eine multithreadingfähige Virtuelle Maschine, "VM", mindestens eine externe Schnittstelle (30) und mindestens einen auf dem Prozessor auszuführenden Thread (T1, T2, T3) aufweist, und wobei die VM gemäß einem Scheduling-Verfahren jedem auszuführenden Thread Programmausführungsressourcen zuteilt, von mindestens einer außerhalb des Systems (10) angeordneten externen Einrichtung (20) externe Daten (21) an mindestens einer externen Schnittstelle (30) bereitgestellt werden, die externen Daten (21) an der mindestens einen externen Schnittstelle (30) durch das System entgegen genommen werden, und das Scheduling-Verfahren durch die VM unter Verwendung der externen Daten (21) gesteuert wird,
**dadurch gekennzeichnet, dass**
die externen Daten (21) in einem an der externen Schnittstelle (30) empfangenen Application Protocol Data Unit, "APDU", Betriebssystem-Kommando, enthalten sind.

2. Verfahren nach Anspruch 1, wobei das Steuern unter Verwendung der externen Daten (21) umfasst oder darin besteht, dass bewirkt wird, dass ein vorbestimmter Thread (T1) auf dem Prozessor (µP) ausgeführt wird.

3. Verfahren nach Anspruch 2, wobei
- der vorbestimmte Thread (T1) sich vor dem Entgegennehmen der externen Daten (21) in einem wartenden Zustand befindet, in welchem der vorbestimmte Thread (T1) auf dem Prozessor (µP) nicht ausführbar ist, und
- der vorbestimmte Thread (T1) durch die entgegengenommenen externen Daten (21) von dem wartenden in einen bereiten Zustand übergeführt wird, in welchem der vorbestimmte Thread (T1) auf dem Prozessor (µP) ausführbar ist.

4. Verfahren nach einem der Ansprüche 1 bis 3, wobei das Scheduling-Verfahren durch einen innerhalb des Systems (10) angeordneten internen Scheduler koordiniert wird, und wobei das Steuern unter Verwendung der externen Daten (21) umfasst oder darin besteht, dass ein anderer Thread (T1) auf dem Prozessor (µP) ausgeführt wird als gemäß dem internen Scheduler vorgesehen ist (T2).

5. Verfahren nach einem der Ansprüche 1 bis 3, wobei das Scheduling-Verfahren durch einen außerhalb des Systems (10), in der externen Einrichtung (20) angeordneten externen Scheduler gesteuert wird.

6. Verfahren nach einem der Ansprüche 1 bis 5, wobei die externen Daten (21) zumindest eine Zeitvorgabe (Timer) umfassen.

7. Verfahren nach einem der Ansprüche 1 bis 6, wobei die externen Daten (21) zumindest eine Bezeichnung eines vorbestimmten Threads (T1) umfassen, der auf dem Prozessor (µP) zur Ausführung gebracht werden soll.

8. Verfahren nach einem der Ansprüche 1 bis 7, wobei als Scheduling-Verfahren zumindest eines der folgenden Verfahren oder eine Kombination mehrerer dieser Verfahren vorgesehen ist: ein Round-Robin-Verfahren, optional ohne oder mit Priorisierung einzelner Threads (T1, T2, T3), Verzweigungszähler-Verfahren.

9. Verfahren nach einem der Ansprüche 1 bis 8, wobei
- zumindest ein Thread zumindest eine oder mehrere Programmverzweigung aufweist, und
- das Steuern unter Verwendung der externen Daten (21) umfasst oder darin besteht, dass nach zumindest manchen der Programmverzweigungen, vorzugsweise nach jeder Programmverzweigung, unter Verwendung der externen Daten (21) bewirkt wird, dass ein vorbestimmter Thread (T1, T2, T3) auf dem Prozessor (µP) ausgeführt wird.

10. Verfahren nach einem der Ansprüche 1 bis 9, wobei das System mehrere externe Schnittstellen (30) umfasst, die unterschiedliche Prioritäten haben, und wobei, wenn das Scheduling-Verfahren durch die Virtuelle Maschine (VM) unter Verwendung der externen Daten (21) gesteuert wird, die externen Daten (21) der mehreren externen Schnittstellen (30) unter Berücksichtigung der unterschiedlichen Prioritäten der Schnittstellen (30) verwendet werden.

## Claims

1. A method for controlling the program execution in a chip card (10), wherein
the chip card (10) has a processor (µP), a multithreading-capable virtual machine "VM", at least one external interface (30) and at least one thread (T1, T2, T3) to be executed on the processor, and wherein
the VM allocates program execution resources to each thread to be executed in accordance with a scheduling method, external data (21) are supplied at at least one external interface (30) from at least one external device (20) arranged outside the system (10),
the external data (21) are accepted at the at least one external interface (30) by the system, and the scheduling method is controlled by the VM while employing the external data (21),
**characterized in that** the external data (21) are contained in an Application Protocol Data Unit, "APDU", command, received at the external interface (30).

2. The method according to claim 1, wherein the controlling while employing the external data (21) comprises or consists in causing a predetermined thread (T1) to be executed on the processor (µP).

3. The method according to claim 2, wherein
- the predetermined thread (T1) is in a waiting state before the accepting of the external data (21), in which the predetermined thread (T1) cannot be executed on the processor (µP), and
- the predetermined thread (T1) is transferred by the accepted external data (21) from the waiting state to a ready state in which the predetermined thread (T1) can be executed on the processor (µP).

4. The method according to any of claims 1 to 3, wherein the scheduling method is coordinated by an internal scheduler arranged within the system (10), and wherein the controlling while employing the external data (21) comprises or consists in that a different thread (T1) is executed on the processor (µP) than is provided (T2) in accordance with to the internal scheduler.

5. The method according to any of claims 1 to 3, wherein the scheduling method is controlled by an external scheduler arranged outside the system (10) in the external device (20).

6. The method according to any of claims 1 to 5, wherein the external data (21) comprise at least one time specification (timer).

7. The method according to any of claims 1 to 6, wherein the external data (21)
comprise at least one designation of a predetermined thread (T1) which is to be brought to execution on the processor (µP).

8. The method according to any of claims 1 to 7, wherein as the scheduling method at least one of the following methods or a combination of several of these methods is provided: a round robin method, optionally with or without prioritization of individual threads (T1, T2, T3), branch counter method.

9. The method according to any of claims 1 to 8, wherein
- at least one thread has at least one or several program branches, and
- the controlling while employing the external data (21) comprises or consists in that after at least some of the program branches, preferably after each program branch, it is caused while employing the external data (21) that a predetermined thread (T1, T2, T3) is executed on the processor (µP).

10. The method according to any of claims 1 to 9, wherein the system comprises several external interfaces (30) which have different priorities, and wherein, when the scheduling method is controlled by the virtual machine (VM) while employing the external data (21), the external data (21) of the several external interfaces (30) are employed while taking into account the different priorities of the interfaces (30).

## Revendications

1. Procédé de commande de l'exécution de programme dans une carte à puce (10), cependant que la carte à puce (10) comporte un processeur (µP), une Machine Virtuelle multifilières, "VM", au moins une interface externe (30) et au moins une filière (T1, T2, T3) à exécuter sur le processeur, et cependant que la VM, conformément à un procédé d'ordonnancement, attribue à chaque filière à exécuter des ressources d'exécution de programme,
d'au moins un dispositif (20) externe agencée en dehors du système (10), des données externes (21) sont fournies à au moins une interface externe (30),
les données externes (21) à la au moins une interface externe (30) sont réceptionnées par le système, et le procédé d'ordonnancement est commandé par la VM en utilisant les données externes (21), **caractérisé en ce que** les données externes (21) sont contenues dans un ordre de système d'exploitation Application Protocol Data Unit, « APDU », reçu à l'interface externe (30).

2. Procédé selon la revendication 1, cependant que la commande en utilisant les données externes (21) comprend ou consiste en ce qu'il est occasionné qu'une filière (T1) prédéterminée est exécutée sur le processeur (µP).

3. Procédé selon la revendication 2, cependant que
- la filière (T1) prédéterminée se trouve, avant la réception des données externes (21), dans un état attendant dans lequel la filière (T1) prédéterminée n'est pas exécutable sur le processeur (µP), et
- la filière (T1) prédéterminée, par les données externes (21) réceptionnées, est portéE de l'état attendant à un état prêt dans lequel la filière (T1) prédéterminée est exécutable sur le processeur (µP).

4. Procédé selon une des revendications de 1 à 3, cependant que le procédé d'ordonnancement est coordonné par un ordonnanceur interne agencé au sein du système (10), et cependant que la commande en utilisant les données externes (21) comprend ou consiste en ce qu'une autre filière (T1) que celle prévue (T2) conformément à l'ordonnancement interne est exécutée sur le processeur (µP).

5. Procédé selon une des revendications de 1 à 3, cependant que le procédé d'ordonnancement est commandé par un ordonnanceur externe agencé en dehors du système (10), dans le dispositif (20) externe.

6. Procédé selon une des revendications de 1 à 5, cependant que les données externes (21) comprennent au moins un minutage (timer).

7. Procédé selon une des revendications de 1 à 6, cependant que les données externes (21) comprennent au moins une désignation d'une filière (T1) prédéterminée qui doit être mise à exécution sur le processeur (µP).

8. Procédé selon une des revendications de 1 à 7, cependant que, comme procédé d'ordonnancement, au moins un des procédés suivants ou une combinaison de plusieurs de ces procédés est prévu(e) : un procédé Round-Robin, en option sans ou avec priorisation de filières individuelles (T1, T2, T3), procédé de compteur de ramifications.

9. Procédé selon une des revendications de 1 à 8, cependant que
- au moins une filière comporte au moins une ou plusieurs ramifications de programme, et
- la commande en utilisant les données externes (21) comprend ou consiste en ce que, après au moins certaines des ramifications de programme, de préférence après chaque ramification de programme, il est occasionné en utilisant les données externes (21) qu'une filière prédéterminée (T1, T2, T3) est exécutée sur le processeur (µP).

10. Procédé selon une des revendications de 1 à 9, cependant que le système comprend plusieurs interfaces externes (30) qui ont différentes priorités, et que, quand le procédé d'ordonnancement est commandé par la Machine Virtuelle (VM) en utilisant les données externes (21), les données externes (21) des plusieurs interfaces externes (30) sont utilisées en prenant en compte les différentes priorités des interfaces (30).
